# EUROPEAN PATENT APPLICATION

(11) **EP 2 537 611 A1**
(43) Date of publication of application: **26.12.2012**
(21) Application number: 10845705.2
(22) Date of filing: 25.10.2010
(51) Int. Cl.: B23B 31/02, B23B 31/107, B23Q 3/12

(54) **ROTATION TOOL INSTALLATION AND REMOVAL DEVICE AND SAID ROTATION TOOL**

(30) Priority: 15.02.2010 JP 2010030196
(71) Applicant: Kabushiki Kaisha Miyanaga, Miki-shi Hyogo 673-0433 (JP)
(72) Inventor: MIYANAGA, Masaaki, Hyogo 673-052 (JP)
(74) Representative: Leinweber & Zimmermann
(86) International application number: PCT/JP2010/006294
(87) International publication number: WO 2011/099100

(57) **Abstract**

An object is to provide a rotary tool and the like, in which an occurrence of plastic deformation is suppressed even when a great rotational torque is exerted. A rotary tool B includes a cutting part 14 at its distal end portion and a shank 11 at its proximal end portion. The cutting part 14 has cutting edges that are arranged in a manner to face forward, and the shank 11 is to be inserted and attached into an insertion hole 1 of an arbor A. The shank 11 includes: engagement recesses 15 which come into engagement with locking members 2 which are provided in the arbor in such a manner as to be protrudable inwardly from the insertion hole 1; and passage recesses 18 which allow the locking members to be guided into the engagement recesses 15. The rotary tool B is configured such that falling off of the rotary tool B from the arbor A is prevented. A groove 16 is formed in the shank 11 at a portion where an engagement recess 15 is either formed or not formed. The groove 16 comes into engagement by surface contact with a protrusion 3 formed in the insertion hole 1 of the arbor A.

## Description

### Technical Field

The present invention relates to an "attachement-detachement apparatus" including: a rotary tool such as a drill suited for so-called heavy cutting for drilling a hole in a thick metal plate; and an arbor to which the rotary tool is attached, and also relates to the "rotary tool".

### Background Art

The applicant of the present application filed various patent applications in relation to an "attachement-detachement apparatus" which includes a rotary tool such as a drill and an arbor to which the shank of the drill can be attached by insertion, and the applicant has been granted patents for such applications. For example, Patent Literature 1 discloses such an attachement-detachement apparatus.
The attachement-detachement apparatus is superior to earlier attachement-detachement apparatuses and provides excellent functional advantages as described below. Specifically, in a case where the attachement-detachement apparatus is configured as a so-called "one-touch type" apparatus, the drill can be attached to the arbor by merely inserting the shank of the drill into an insertion hole of the arbor. Also, in a case where the attachement-detachement apparatus is configured as a so-called "two-touch type" apparatus, the drill can be attached to the arbor by simply inserting the shank into the insertion hole of the arbor while operating an operation sleeve for the insertion into the arbor. As a result, rotational torque can be transmitted from the arbor to the drill, and the drill is fixed to the arbor in an axial direction.

### Citation List

### Patent Literature

PTL 1: International Publication No. WO98/37999

### Summary of Invention

### Technical Problem

Meanwhile, in the case of the above attachement-detachement apparatus, when the drill is attached into the insertion hole of the arbor, spherical locking members that are arranged in such a manner as to be withdrawable in the outward radial direction of the insertion hole of the arbor come into engagement with engagement recesses formed in the shank of the drill. Through such engagement, rotational torque transmission is enabled.
However, in the case of the above structure, there is a possibility that when a rotational torque of a predetermined level or greater is temporarily exerted between the locking members and the engagement recesses during a drilling process, plastic deformation of the locking members and/or the engagement recesses occurs. In particular, plastic deformation tends to occur when a drill for heavy cutting is used.

If such plastic deformation occurs, it becomes necessary to replace the drill and/or the arbor with new ones.
Generally speaking, the drill is a wear component, and the arbor is formed from a material having a greater hardness than the material of the drill. Accordingly, in general, the drill is the one to be replaced.
As described above, it becomes necessary to replace the drill due to the occurrence of plastic deformation of the engagement recesses even though the drill's cutting edge is not worn yet.
The above attachement-detachement apparatus is configured such that the spherical locking members, and the engagement recesses which are in the shape of tapered holes, are in "point contact" or "line contact" with each other. Accordingly, during a drilling process, a significantly large stress is exerted per unit area. A great rotational torque causing a significant impact is temporarily exerted particularly when, for example, the drill's cutting edge "bites" into a workpiece. Therefore, in the case of the above attachement-detachement apparatus, it is difficult to prevent plastic deformation. This problem arises particularly when a drill for heavy cutting is used.

The most commonly used type of attachement-detachement apparatus in the world is a screw-locking type. Specifically, the screw-locking type is such that a part of an outer peripheral face of the shank of the drill is formed into a recessed flat surface, and a locking screw provided at the arbor is pressed against the flat surface for fixing. The second most commonly used type of attachement-detachement apparatus is one as disclosed in Patent Literature 1. Looking at the number of currently used attachement-detachement apparatuses worldwide, the use of the former type of apparatus takes up 90 % or more.
Moreover, as mentioned above, the drill is a wear component whereas the arbor is a durable component. Accordingly, when a new-type drill is introduced into the market in the future, selling the new-type drill in high volume is difficult unless the drill is one to be attached to an existing arbor by insertion.

The present invention has been made in view of such current situation. An object of the present invention is to provide a rotary tool having such a structure that the above-described plastic deformation is suppressed even when a great rotational torque is temporarily exerted on a torque transmission part between a drill and an arbor, and to provide an attachement-detachement apparatus including the rotary tool and the arbor to which the rotary tool is to be attached.

### Solution to Problem

In an attachement-detachement apparatus including a rotary tool and an arbor according to the present invention, a shank formed at a proximal end portion of the rotary tool is configured to be inserted and attached into an insertion hole of the arbor in such a manner as to allow a rotational torque to be transmitted from the arbor to the rotary tool and to allow the rotary tool to be fixed to the arbor in an axial direction during a drilling process, the insertion hole having an opening opened at a distal end of the arbor and the arbor being attached to a drive shaft. In the attachement-detachement apparatus, a rotational torque transmission mechanism configured to transmit the rotational torque from the arbor to the rotary tool, and an axial direction fixing mechanism configured to fix the rotary tool to the arbor in the axial direction, are separately formed between the shank of the rotary tool and the insertion hole of the arbor.

According to the attachement-detachement apparatus, which has the above-described structure, the rotational torque transmission mechanism configured to transmit the rotational torque from the arbor to the rotary tool, and the axial direction fixing mechanism configured to fix the rotary tool to the arbor in the axial direction, are separately formed. This makes it possible to set a contact area of the rotational torque transmission mechanism freely (i.e., to be large), through which contact area the rotational torque is transmitted. Therefore, in the attachement-detachement apparatus, an occurrence of plastic deformation can be prevented even if a great rotational torque is exerted temporarily. Since the axial direction fixing mechanism is configured to merely allow the rotary tool to be held by the arbor in the axial direction, the axial direction fixing mechanism can be made compact.

In the attachement-detachement apparatus, the rotational torque transmission mechanism may include: a protrusion formed at one of the arbor and the rotary tool in a manner to extend in the axial direction; and a groove to be engaged with the protrusion, the groove being formed at the other of the arbor and the rotary tool in a manner to extend in the axial direction, and the axial direction fixing mechanism may include: an engagement recess formed in the shank of the rotary tool; and a locking member configured to come into engagement with the engagement recess, the locking member being positioned such that the locking member is protrudable in an inward radial direction within the insertion hole of the arbor.
In such a case, a rotational torque is transmitted from the arbor to the rotary tool through surface contact at an engagement part where the protrusion and the groove are engaged with each other. Therefore, even if a great rotational torque is exerted, the rotational torque can be assuredly transmitted without causing plastic deformation. The rotary tool is locked to the arbor in the axial direction through the engagement between the locking member and the engagement recess. Since no rotational torque is exerted on an engagement part where the locking member and the engagement recess are engaged with each other, plastic deformation is not caused at the engagement part. Therefore, the engagement part can be made compact.

In the attachement-detachement apparatus, the rotational torque transmission mechanism may include: a groove formed in the shank in a manner to extend in the axial direction; and a protrusion formed in the insertion hole of the arbor in a manner to extend in the axial direction, the protrusion coming into engagement with the groove by surface contact. Employing such a structure allows the attachment-detachment apparatus to be fabricated through an easy process, which is preferable.

In the attachement-detachement apparatus, a position at which the groove is formed and a position at which the engagement recess is formed may be set to coincide with each other in a circumferential direction of the shank, and a position at which the locking member is provided and a position at which the protrusion is provided may be set to coincide with each other in a circumferential direction of the insertion hole of the arbor, such that the protrusion is formed at an opening edge side of the insertion hole in the axial direction and the locking member is positioned at a proximal end side of the insertion hole in the axial direction. Employing such a structure allows the attachement-detachement apparatus to be simplified in structure and to be fabricated with fewer processing man-hours. In this case, the groove and the protrusion may be formed as a spline groove and a spline hole.

In the attachement-detachement apparatus, the groove may be formed to have a size that allows the locking member to pass through to the engagement recess. Employing such a structure makes it possible to smoothly insert and attach the shank into the insertion hole of the arbor.

In the attachement-detachement apparatus, a play in a rotational direction in the axial direction fixing mechanism may be greater than a play in the rotational direction in the rotational torque transmission mechanism. Employing such a structure a makes it possible to realize an attachement-detachement apparatus in which no rotational torque is exerted on the axial direction fixing mechanism even if a great rotational torque is exerted between the drill and the arbor.

In the rotary tool for the attachement-detachement apparatus according to the present invention, it is preferred that the groove, which comes into engagement by surface contact with the protrusion formed in the insertion hole, is formed in a portion, of the shank, that does not coincide in a circumferential direction of the shank with a portion, of the shank, in which the engagement recess is formed.

In the rotary tool of the attachement-detachement apparatus according to the present invention, the groove, which comes into engagement by surface contact with the protrusion formed in the insertion hole of the arbor, may be formed in a portion, of the shank, that coincides in a circumferential direction of the shank with a portion, of the shank, in which the engagement recess is formed. Such a structure is efficient, and also preferable from the viewpoint of being able to leave some portions at an outer peripheral face of the shank unprocessed.

In both of the above rotary tools, the rotational torque transmission mechanism configured to transmit the rotational torque from the arbor to the rotary tool, and the axial direction fixing mechanism configured to fix the rotary tool to the arbor in the axial direction, are separately formed. This makes it possible to set a contact area of the rotational torque transmission mechanism freely (i.e., to be large), through which contact area the rotational torque is transmitted. Therefore, an occurrence of plastic deformation can be prevented even if a great rotational torque is exerted temporarily.

In the rotary tool, an engagement face for screw locking may be formed at an outer peripheral portion of the shank, in which portion neither the groove nor the engagement recess is formed, such that a position at which the engagement face for screw locking is formed is spaced apart from a proximal end of the shank toward a distal end of the shank. In such a case, the rotary tool can be attached to a screw-locking type arbor. In this case, of course, the rotary tool is also attachable to both the one-touch type arbor and the two-touch type arbor. If this structural feature of the rotary tool is combined with the above-described structure in which the groove is formed in a portion, of the shank, that coincides in the circumferential direction with a portion, of the shank, in which the engagement recess is formed, then the resultant structure provides sufficient space for the engagement face to be easily formed.
Forming the engagement face allows the rotary tool according to the present invention to be attached to a screw-locking type arbor which has a dominant share (market share) worldwide.

In the rotary tool, the groove may be formed in a tapered shape such that, when seen in side view, the groove has a width in the circumferential direction and the width is widened toward a proximal end of the groove. In such a case, at the time of attaching the rotary tool to the arbor, positioning of the rotary tool in the circumferential direction in relation to the insertion hole of the arbor can be easily performed.

In the rotary tool, a distal end of the groove may be diagonally formed such that, in side view, the distal end of the groove is positioned forward from a proximal end of the groove with respect to a rotational direction for cutting. If such a structure is employed, when a rotational torque is exerted on the rotary tool, a component force is exerted on a side closer to the arbor. Thus, this structure makes it possible to reduce a stress exerted on the axial direction fixing mechanism.

In the rotary tool, the shank may be formed as a substantially even-numbered polygonal cylindrical body which is substantially six or more sided; the engagement recess may be formed in at least one of the faces of the substantially polygonal cylindrical body; the groove may be formed in at least one of the remaining faces; and the engagement face for screw locking may be formed at another one of the remaining faces. Employing such a structure allows the shank of the rotary tool to be formed through an easy process.

In the rotary tool, the groove may be formed as a recess in the proximal end face of the rotary tool such that the groove extends in the radial direction.

### Advantageous Effects of Invention

The above-described structures of the attachement-detachement apparatus for a rotary tool and the rotary tool make it possible to provide an attachement-detachement apparatus and a rotary tool, in which the aforementioned plastic deformation is suppressed even if a great rotational torque is temporarily exerted on a torque transmission part between a drill and an arbor.

### Brief Description of Drawings

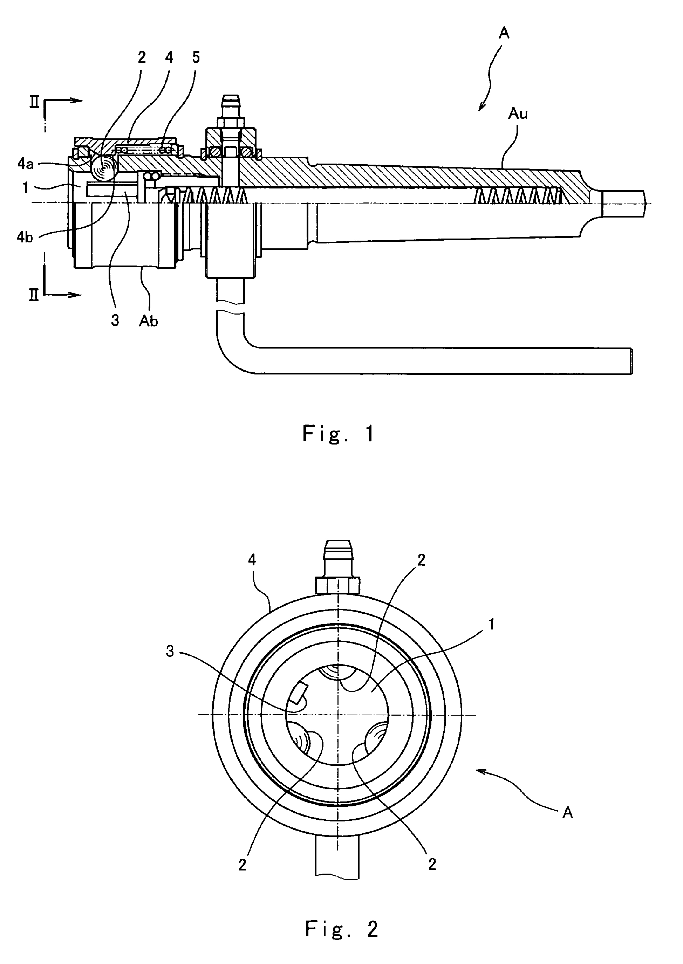

[Fig. 1] Fig. 1 is a side view showing a structure of an arbor forming a part of an attachement-detachement apparatus for a core drill which is a rotary tool, according to an embodiment of the present invention, such that the upper part of the arbor above its center line is shown in cross section.
[Fig. 2] Fig. 2 is a view taken along line II-II in Fig. 1 as viewed in the direction of the arrows of line II-II, the view showing a structure of an insertion hole of a rotational torque transmission mechanism of the arbor of the attachement-detachement apparatus shown in Fig. 1.

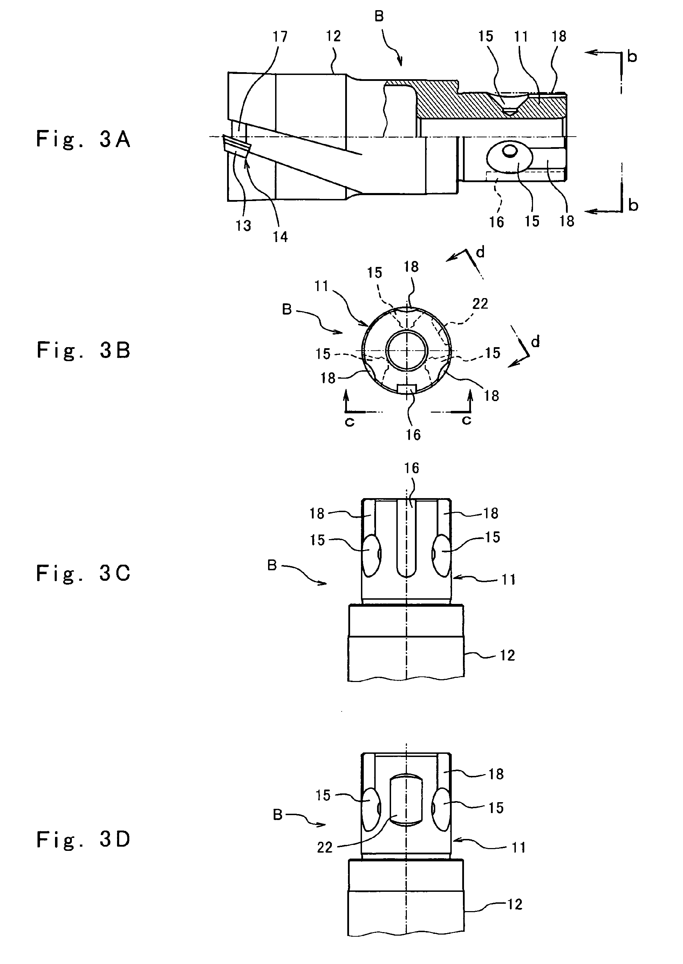

[Figs. 3A to 3D] Figs. 3A to 3D show structures of a drill according to one embodiment, which is to be attached by insertion to the arbor shown in Fig. 1; Fig. 3A is an overall side view showing an overall structure of the drill, partially in cross section; Fig. 3B is a view taken along line b-b in Fig. 3A as viewed in the direction of the arrows of line b-b; Fig. 3C is a view taken along line c-c in Fig. 3B as viewed in the direction of the arrows of line c-c; and Fig. 3D is a view taken along line d-d in Fig. 3B as viewed in the direction of the arrows of line d-d.

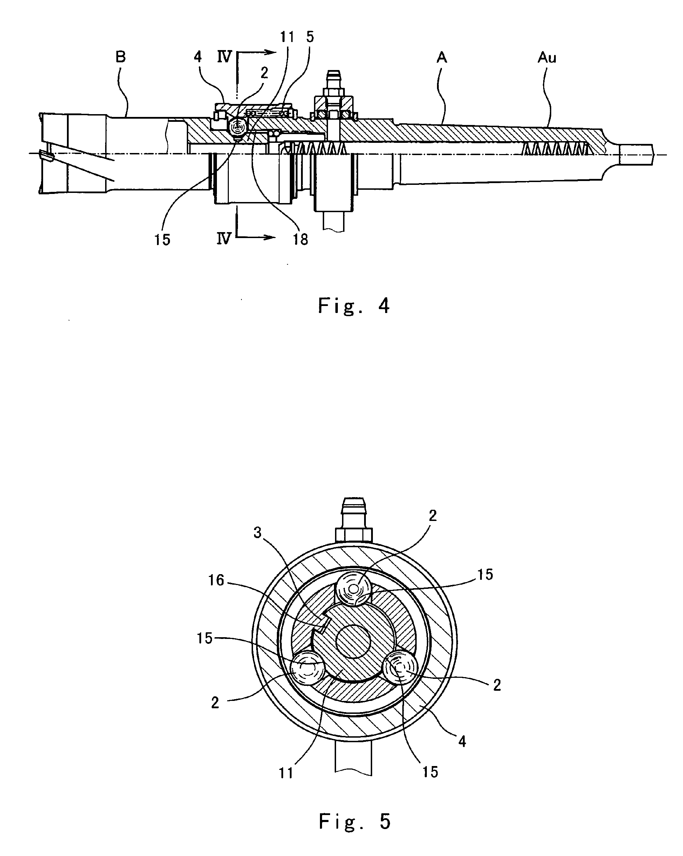

[Fig. 4] Fig. 4 is an overall side view showing, partially in cross section, the attachement-detachement apparatus according to the embodiment in a state where the shank of the drill shown in Figs. 3A to 3D is attached by insertion to the arbor shown in Fig. 1.
[Fig. 5] Fig. 5 is a cross-sectional view taken along line IV-IV in Fig. 4 as viewed in the direction of the arrows of line IV-IV, the view showing a state where the shank of the drill and the arbor are engaged with each other.

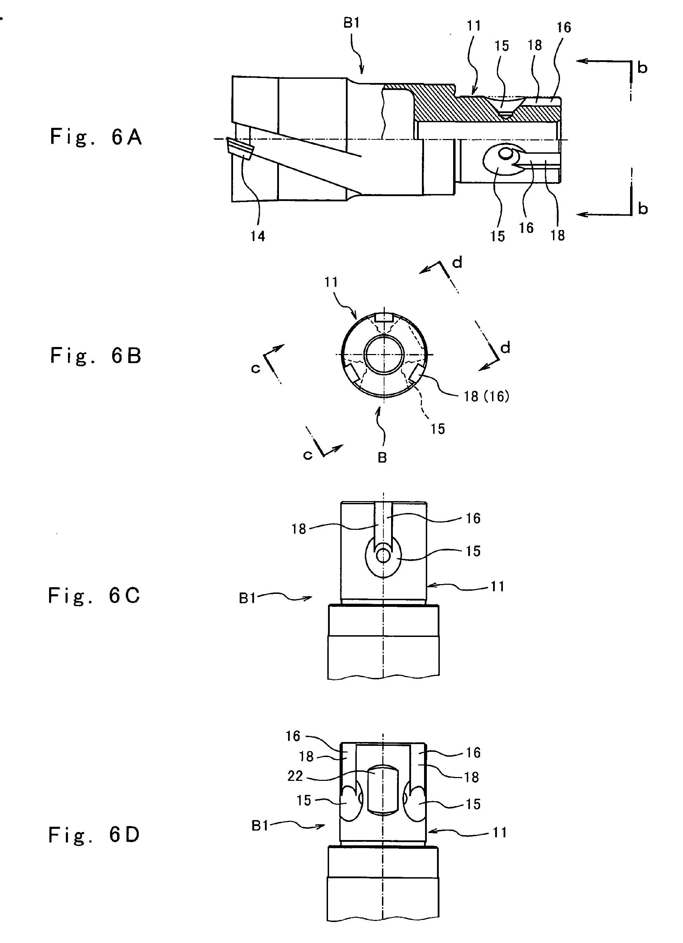

[Figs. 6A to 6D] Figs. 6A to 6D show structures of a drill according to Embodiment 2, which is to be attached by insertion to the arbor shown in Fig. 1; Fig. 6A is an overall side view showing an overall structure of the drill, partially in cross section; Fig. 6B is a view taken along line b-b in Fig. 6A as viewed in the direction of the arrows of line b-b; Fig. 6C is a view taken along line c-c in Fig. 6B as viewed in the direction of the arrows of line c-c; and Fig. 6D is a view taken along line d-d in Fig. 6B as viewed in the direction of the arrows of line d-d.

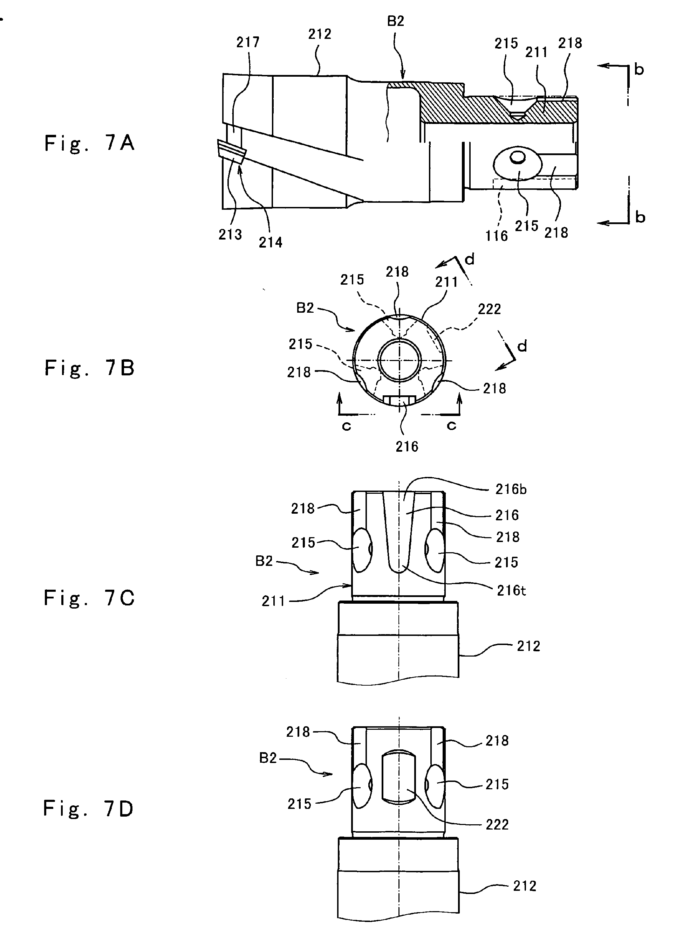

[Figs. 7A to 7D] Figs. 7A to 7D show structures of a drill according to Embodiment 3, which is to be attached by insertion to the arbor shown in Fig. 1; Fig. 7A is an overall side view showing an overall structure of the drill, partially in cross section; Fig. 7B is a view taken along line b-b in Fig. 7A as viewed in the direction of the arrows of line b-b; Fig. 7C is a view taken along line c-c in Fig. 7B as viewed in the direction of the arrows of line c-c; and Fig. 7D is a view taken along line d-d in Fig. 7B as viewed in the direction of the arrows of line d-d.

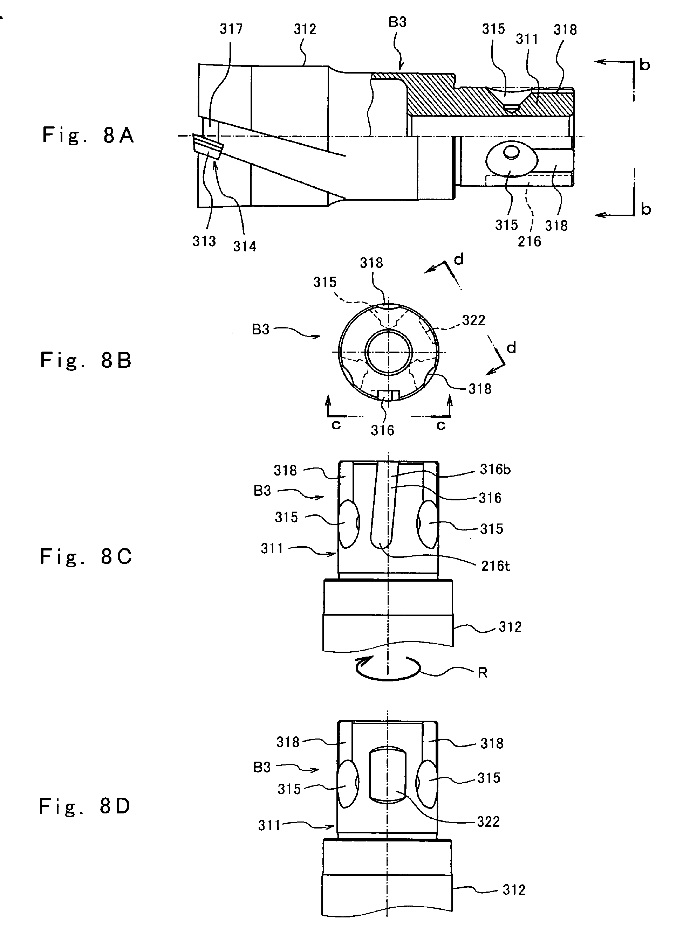

[Figs. 8A to 8D] Figs. 8A to 8D show structures of a drill according to Embodiment 4, which is to be attached by insertion to the arbor shown in Fig. 1; Fig. 8A is an overall side view showing an overall structure of the drill, partially in cross section; Fig. 8B is a view taken along line b-b in Fig. 8A as viewed in the direction of the arrows of line b-b; Fig. 8C is a view taken along line c-c in Fig. 8B as viewed in the direction of the arrows of line c-c; and Fig. 8D is a view taken along line d-d in Fig. 8B as viewed in the direction of the arrows of line d-d.

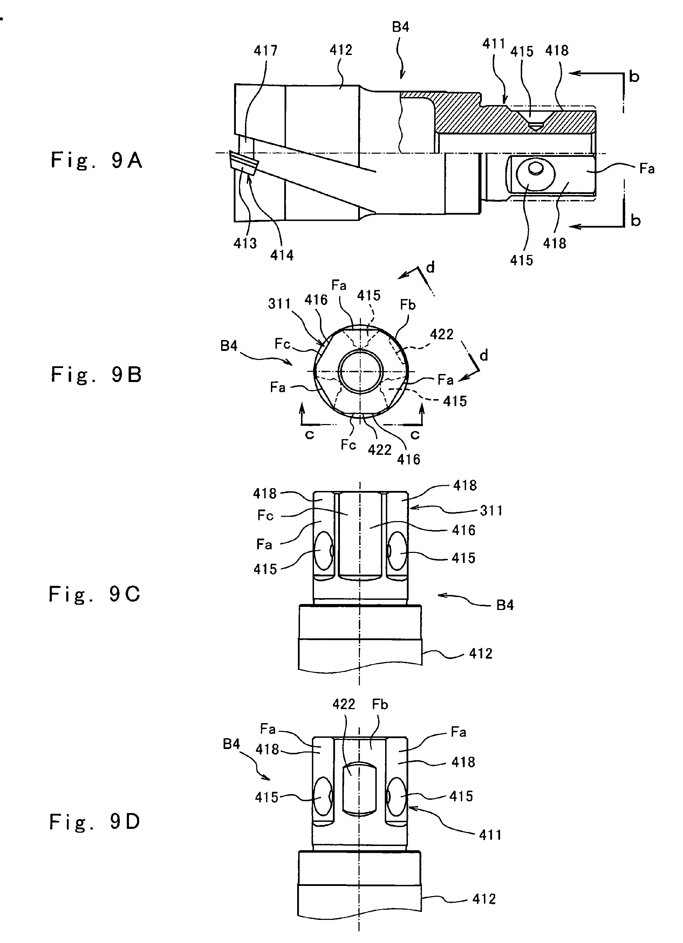

[Figs. 9A to 9D] Figs. 9A to 9D show structures of a drill according to Embodiment 5, which is to be attached by insertion to the arbor shown in Fig. 1; Fig. 9A is an overall side view showing an overall structure of the drill, partially in cross section; Fig. 9B is a view taken along line b-b in Fig. 9A as viewed in the direction of the arrows of line b-b; Fig. 9C is a view taken along line c-c in Fig. 9B as viewed in the direction of the arrows of line c-c; and Fig. 9D is a view taken along line d-d in Fig. 9B as viewed in the direction of the arrows of line d-d.

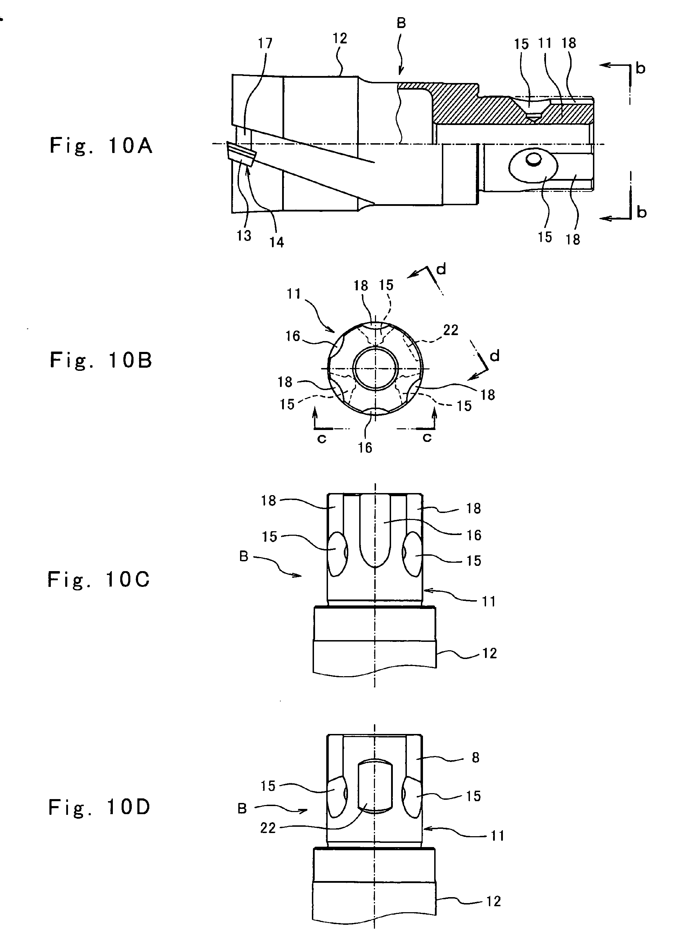

[Figs. 10A to 10D] Figs. 10A to 10D show structures of a drill according to Embodiment 6, which is to be attached by insertion to the arbor shown in Fig. 1; Fig. 10A is an overall side view showing an overall structure of the drill, partially in cross section; Fig. 10B is a view taken along line b-b in Fig. 10A as viewed in the direction of the arrows of line b-b; Fig. 10C is a view taken along line c-c in Fig. 10B as viewed in the direction of the arrows of line c-c; and Fig. 10D is a view taken along line d-d in Fig. 10B as viewed in the direction of the arrows of line d-d.

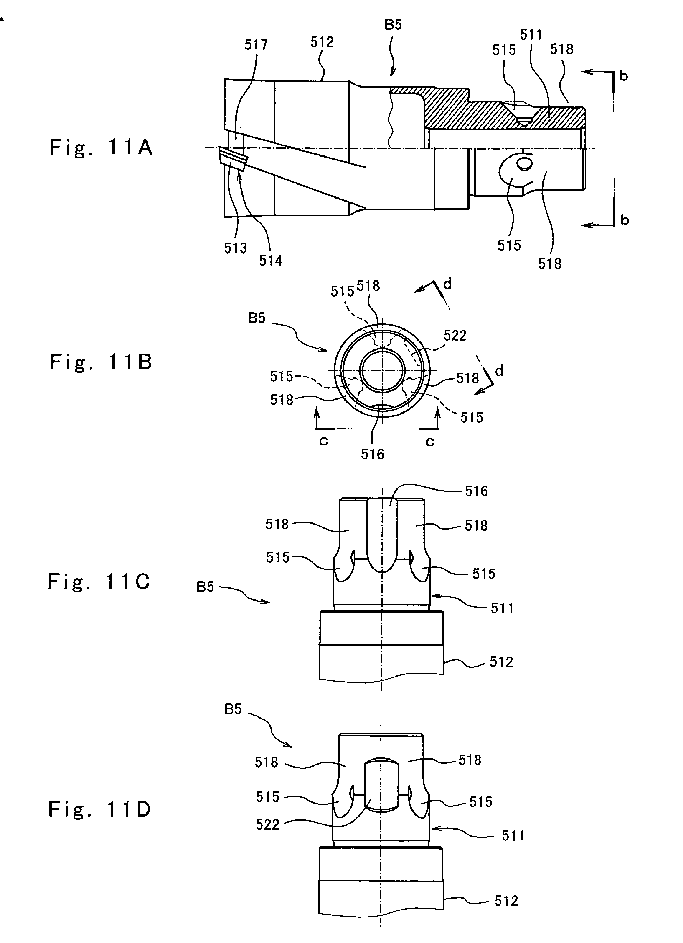

[Figs. 11A to 11 D] Figs. 11A to 11 D show structures of a drill according to Embodiment 7, which is to be attached by insertion to the arbor shown in Fig. 1; Fig. 11A is an overall side view showing an overall structure of the drill, partially in cross section; Fig. 11B is a view taken along line b-b in Fig. 11A as viewed in the direction of the arrows of line b-b; Fig. 11C is a view taken along line c-c in Fig. 11B as viewed in the direction of the arrows of line c-c; and Fig. 11D is a view taken along line d-d in Fig. 11B as viewed in the direction of the arrows of line d-d.

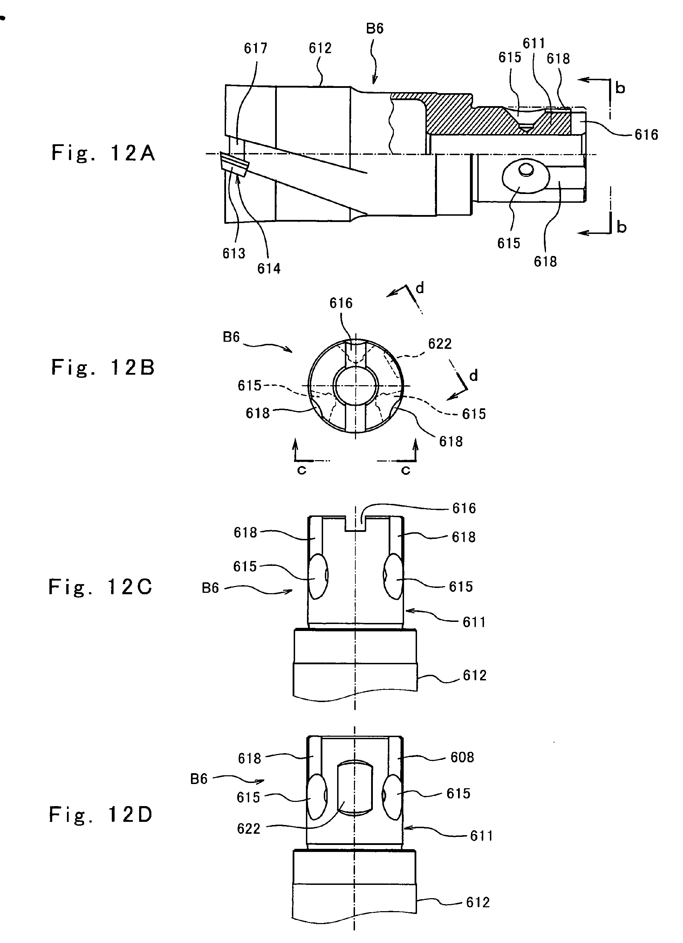

[Figs. 12A to 12D] Figs. 12A to 12D show structures of a drill according to Embodiment 8, which is to be attached by insertion to the arbor shown in Fig. 1; Fig. 12A is an overall side view showing an overall structure of the drill, partially in cross section; Fig. 12B is a view taken along line b-b in Fig. 12A as viewed in the direction of the arrows of line b-b; Fig. 12C is a view taken along line c-c in Fig. 12B as viewed in the direction of the arrows of line c-c; and Fig. 12D is a view taken along line d-d in Fig. 12B as viewed in the direction of the arrows of line d-d.

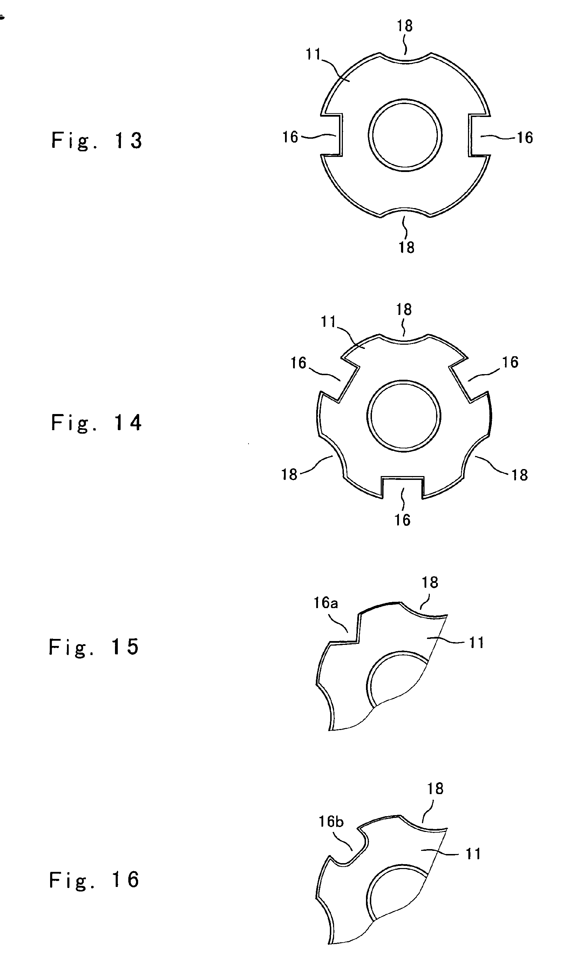

[Fig. 13] Fig. 13 is a plan view corresponding to Fig. 3B, the plan view showing a rotational torque transmission mechanism of a drill according to an embodiment where grooves are formed in the drill at two positions in a circumferential direction.
[Fig. 14] Fig. 14 is a plan view corresponding to Fig. 3B and Fig. 13, the plan view showing a rotational torque transmission mechanism of a drill according to an embodiment where grooves are formed in the drill at three positions in the circumferential direction.
[Fig. 15] Fig. 15 is a partially enlarged plan view showing a groove that has a different shape from the groove shape shown in Fig. 14.
[Fig. 16] Fig. 16 is a partially enlarged plan view showing a groove that has a different shape from the groove shape shown in Fig. 15.

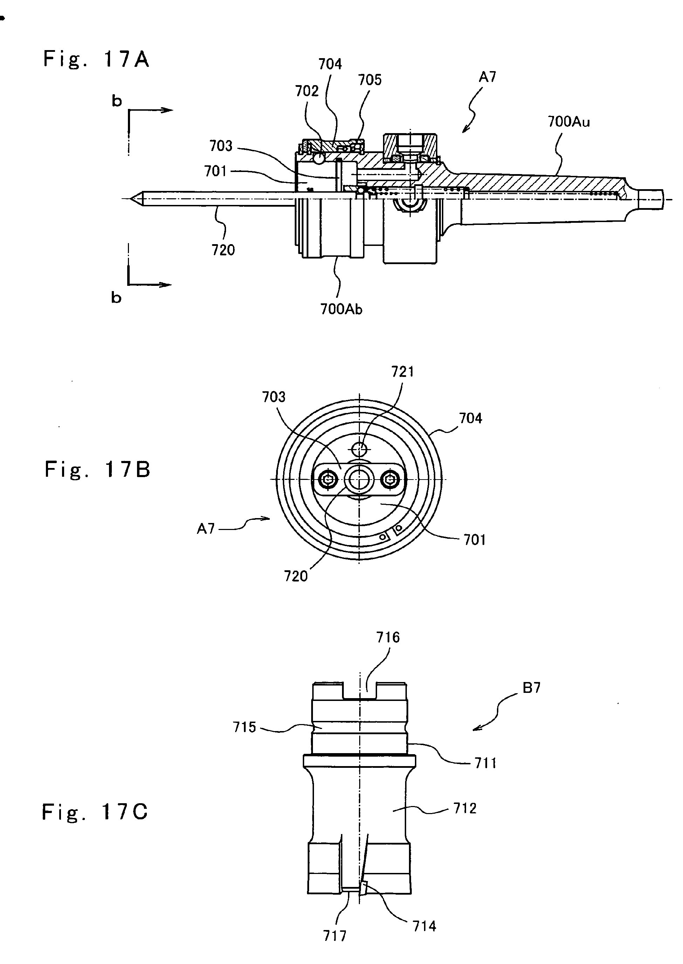

[Figs. 17A to 17C] Figs. 17A to 17C show structures of an attachement-detachement apparatus and a rotary tool, the attachement-detachement apparatus including a core drill having a groove in the same shape as that of the groove in the embodiment shown in Figs. 12A to 12D; Fig. 17A is a side view showing an arbor such that the upper part of the arbor above its center line is shown in cross section; Fig. 17B is a view taken along line b-b in Fig. 17A as viewed in the direction of the arrows of line b-b; and Fig. 17C is a side view of the core drill to be attached to the arbor shown in Fig. 17A.

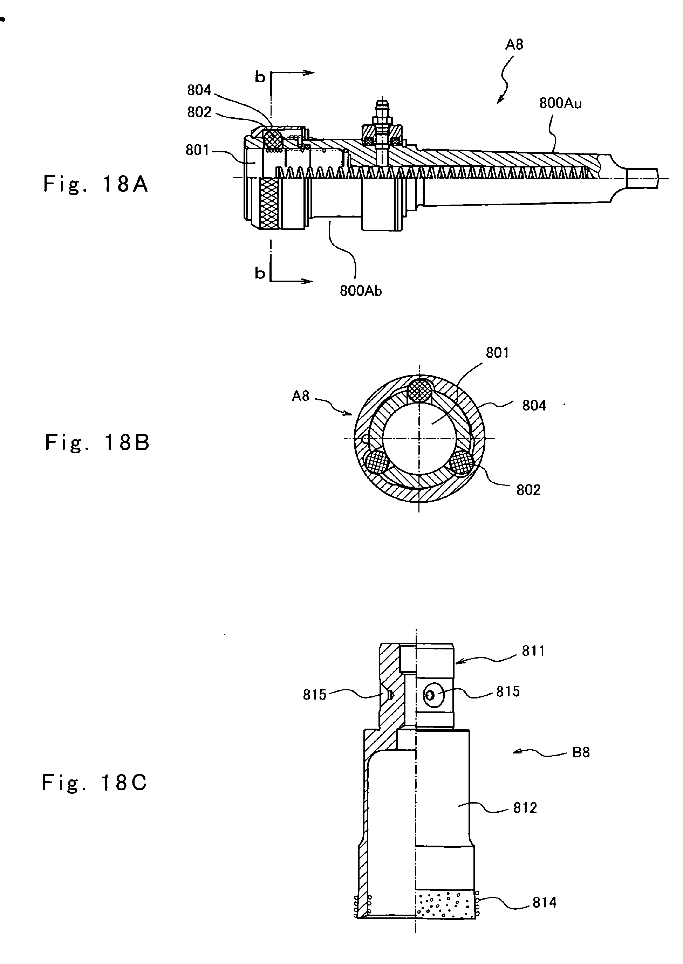

[Figs. 18A to 18C] Figs. 18A to 18C show structures of an arbor and a rotary tool of an attachement-detachement apparatus which includes a diamond core drill as the rotary tool, according to an embodiment different from the embodiments shown in Fig. 1 and Figs. 17A to 17C; Fig. 18A is a side view showing the arbor such that the upper part of the arbor above its center line is shown in cross section; Fig. 18B is a view taken along line b-b in Fig. 18A as viewed in the direction of the arrows of line b-b; and Fig. 18C is a side view of the rotary tool to be attached to the arbor shown in Fig. 18A.

### Description of Embodiments

Hereinafter, the present invention is described in more detail based on embodiments. In the embodiments, a core drill is taken as an example of a rotary tool, and the embodiments are described by also taking, as an example, an attachement-detachement apparatus that allows the core drill to be detachably attached by insertion to an arbor of a so-called two-touch type.

### (Embodiments)

The attachement-detachement apparatus includes: an arbor A shown in Fig. 1; and a core drill B (hereinafter, simply referred to as a drill) shown in Figs. 3A to 3D, the drill B having a shank 11 to be attached into an insertion hole 2 of the arbor A.
Fig. 1 and Fig. 2 show structures of the so-called two-touch type arbor A, which is a part of the attachement-detachement apparatus.
The arbor A is configured such that a proximal end portion Au (shown on the right side of Fig. 1), which has a tapered shape, is attached to a drive shaft of a rotation driving apparatus (e.g., a drilling machine) which is not shown.
The insertion hole 1 is formed in a distal end portion Ab (shown on the left end of Fig. 1) of the arbor A, such that the insertion hole 1 is open at the distal end face of the arbor A (i.e., open at the left end of Fig. 1). At an inner peripheral face of the insertion hole 1, spherical locking members 2 are arranged at three positions (see Fig. 2) with regular intervals in a circumferential direction. The spherical locking members 2 are configured such that when the spherical locking members 2 are in a state as shown in Fig. 2, they can withdraw in the outward radial direction from the inner peripheral face of the insertion hole 1.
Further, one protrusion 3 (see Fig. 2), the bottom (cross-sectional) view of which has a rectangular shape, is formed between one of the locking members 2 and its adjacent locking member 2 of the insertion hole 1, such that the protrusion 3 is disposed at the middle position in the circumferential direction between these two locking members 2 in a manner to protrude in the inward radial direction. Although in the present embodiment only one protrusion 3 is formed at the inner peripheral face along the circumferential direction, a plurality of protrusions 3 may be formed. Specifically, one protrusion 3 or a plurality of protrusions 3 may be formed at each space between adjoining locking members 2 depending on, for example, a rotational torque to be transmitted.
An operation sleeve 4 is disposed at an outer peripheral portion of the arbor A. The operation sleeve 4 is pressed by a spring 5 in a direction from the proximal end to the distal end of the arbor A, such that the operation sleeve 4 is movable (i.e., operable) in an axial direction (i.e., left-right direction in Fig. 1) by a predetermined distance. Due to the pressing force of the spring 5, the operation sleeve 4 is pressed toward the distal end. Each locking member 2 is configured to be pressed in the inward radial direction by pressing faces. The pressing faces include: an inclined face 4a formed at an inner peripheral face of a distal end portion of the operation sleeve 4; and a straight cam face 4b continuous with the inclined face 4a.

As shown in Figs. 3A to 3D, the drill B detachably attached to the arbor A includes, at its proximal end portion (right end portion in Fig. 3A), the shank 11 which is to be inserted and attached into the insertion hole 1. The drill B has a cylindrical body 12 integrally formed on its distal end portion (left side portion in Fig. 3A). A cutting part 14 is formed at the distal end (left end in Fig. 3A) of the body 12 in such a manner that a plurality of cutting edges 13 are arranged in the circumferential direction at suitable intervals. At an outer peripheral face of the body 12, gullets 17 are formed in a recessed manner such that each gullet 17 is positioned between cutting edges 13. The gullets 17 are provided for discharging swarf produced by the cutting edges 13 toward the proximal end (to the right in Fig. 3A). Each gullet 17 is formed at the outer peripheral face of the body 12 in an inclined manner, such that the proximal end of the gullet 17 is positioned backward from the distal end of the gullet 17 with respect to a rotational direction.

The shank 11 of the drill B has a round cross section. In an outer peripheral face of the shank 11, engagement recesses 15 which are in the shape of tapered holes each having a hole diameter reduced toward the axial center of the shank 11 are formed at three positions with regular intervals in the circumferential direction, such that their positions correspond to the positions of the locking members 2 provided in the arbor A. In the present embodiment, an "axial direction fixing mechanism" for fixing the drill B to the arbor A in the axial direction is realized by the engagement recesses 15 and the locking members 2. To be specific, the axial direction fixing mechanism prevents the shank 11 of the drill B from falling off from the insertion hole 1 of the arbor A. It should be noted that passage recesses 18 are formed in a manner to extend from the respective engagement recesses 15 to the proximal end of the shank 11 for the purpose of allowing the locking members 2 to pass through in the axial direction at the time of inserting the shank 11 into the insertion hole 1. There are various conceivable shapes of the passage recesses 18. For example, as shown in Figs. 9A to 9D, the passage recesses 18 may be formed as flat surfaces by partially processing the outer peripheral face of the shank 11.

As shown in Figs. 3A to 3D, a groove 16 having a rectangular cross section is formed in the shank 11 at a portion in which no engagement recess 15 is formed, the portion being positioned between one engagement recess 15 and another engagement recess 15 that is adjacent to the one engagement recess 15 in the circumferential direction, the portion being in the middle position between these engagement recesses 15 in the circumferential direction. The position, dimensions, and shape of the groove 16 correspond to those of the protrusion 3 of the arbor A. The groove 16 and the protrusion 3 realize a "rotational torque transmission mechanism" which transmits a rotational torque from the arbor A to the drill B. That is, the rotational torque transmission mechanism allows a rotational torque that occurs when a drilling process is performed with the drill B to be transmitted from the arbor A to the drill B. In the present embodiment, only one groove 16 corresponding to the protrusion 3 is formed in the outer periphery of the shank 11 in the circumferential direction. However, if a plurality of protrusions 3 are formed, then grooves 16 are formed such that the number and positions of the grooves 16 correspond to those of the protrusions 3.
In the above structure, it is preferred that a play in the rotational direction in the axial direction fixing mechanism, that is, a play in the engagement between each locking member 2 and the corresponding engagement recess 15 in the rotational direction, is greater than a play in the engagement between the protrusion 3 and the groove 16 in the rotational direction since such a structure makes it possible to avoid an occurrence of plastic deformation of the locking members 2 and the engagement recesses 15 due to a rotational torque during cutting.
It is more preferred if, as in the present embodiment, a play in the axial direction in the axial direction fixing mechanism is less than a play in the axial direction in the rotational torque transmission mechanism, because such a structure makes it possible to reduce a rattle in the axial direction between the drill B and the arbor A.

In the above-described embodiment, as shown in Figs. 3A to 3D, the locking members 2 and the corresponding engagement recesses 15 are provided at three positions in the circumferential direction in a corresponding manner, and the protrusion 3 and the corresponding groove 16 are disposed at one position in the circumferential direction in a corresponding manner. However, the number of locking members 2, engagement recesses 15, protrusions 3, and grooves 16 may be suitably determined based on, for example, the magnitude of a rotational torque to be transmitted and a stress necessary for preventing falling off of the shank 11 from the insertion hole 1. For example, as in Figs. 10A to 10D and Fig. 13, the locking members 2 (not shown) and the engagement recesses 15 may be provided at three positions in the circumferential direction, and the protrusions 3 (not shown) and the grooves 16 may be provided at two positions in the circumferential direction. Alternatively, as in Fig. 14, the protrusions 3 (not shown) and the grooves 16 may be provided at three positions in the circumferential direction. It should be noted that in Figs. 10A to 10D, Fig. 13, and Fig. 14, the same components as those shown in Figs. 3A to 3D are denoted by the same reference signs as those used in Figs. 3A to 3D, and therefore, a description of such components is omitted.

The cross sectional shape of the protrusion 3 and the groove 16 is not limited to the aforementioned rectangular shape. The cross section may be V-shaped as shown by a groove 16a in Fig. 15, or may be a shape as shown by a groove 16b in Fig. 16 in which corner portions are curved for the purpose of reducing a notching effect. As an alternative structure, the groove 16a may be formed in the inner periphery of the insertion hole 1, and the protrusion 3 may be provided at the outer periphery of the shank 11.

In the case of the drill B according to the present embodiment, an engagement face 22 for screw locking is formed at a given position on the outer peripheral face of the shank 11, such that neither the engagement recesses 15 nor the groove 16 are formed at any positions that coincide with the position of the engagement face 22 in the circumferential direction. In the above-described so-called two-touch type (or one-touch type) attachement-detachement apparatus, the engagement face 22 is unnecessary at the time of inserting and attaching the shank 11 into the insertion hole 1 of the arbor A. However, in the case of attaching the drill B to a "screw connection type" arbor (not shown) which is most commonly used in the world, when a screw screwed into the arbor from an outer peripheral face of the arbor is fastened, the screw comes into contact with the engagement face 22. In this manner, the drill B can be fixed to the arbor A via the engagement face 22.

As another embodiment (Embodiment 2) according to the present invention, a drill B1 is described below. As shown in Figs. 6A to 6D, the groove 16 may be formed at the same position as that of one of the passage recesses 18 which allow the corresponding locking members 2 to pass through at the time of inserting and attaching the shank 11 of the drill B1 into the insertion hole 1 of the arbor A. In Embodiment 2, if the groove 16 is formed such that the depth of the groove 16 is deeper than that of the passage recesses 18 and the width of the groove 16 is the same as or narrower than that of the passage recesses 18, then the groove 16 can also act as one of the passage recesses 18. That is, the formation of only the groove 16 realizes the functions of both the groove 16 and one of the passage recesses 18. Such a structure is significantly efficient.
Embodiment 2 is preferred from the standpoint of providing sufficient space for forming the above-described engagement face 22.
Other than the above, the components of Embodiment 2 are the same as those described in the embodiment shown in Figs. 3A to 3D, and are denoted by the same reference signs as those used in Figs. 3A to 3D. Therefore, a description of such components is omitted.
In the case of employing the above-described structure, processing man-hours and fabrication costs are reduced, and also, the structure is simplified.

As another embodiment (Embodiment 3) according to the present invention, a drill B2 is described below. As shown in Figs. 7A to 7D, the width of a proximal end portion 216b of a groove 216 is wider in the circumferential direction than the width of a distal end portion 216t of the groove 216. Forming the groove 216 into such a tapered shape in side view is also one preferred embodiment.
In the case of the drill B2, at the time of attaching the drill B2 to the arbor A, positioning of the arbor A in the circumferential direction in relation to the insertion hole 1 can be easily performed. Other than the above, the components of Embodiment 3 are the same as those described in the embodiment shown in Figs. 3A to 3D. In Embodiment 3, components that are the same as or corresponding to components of the embodiment shown in Figs. 3A to 3D are denoted by reference signs that result from adding 200 to the reference signs of the same or corresponding components in the embodiment shown in Figs. 3A to 3D, and therefore, a description such components is omitted.

As yet another embodiment (Embodiment 4) according to the present invention, a drill B3 is described below. As shown in Figs. 8A to 8D, a groove 316 is diagonally formed such that, in side view, a distal end portion 316t is positioned forward from a proximal end portion 316b with respect to a rotational direction R for cutting.
In the case of the drill B3, when a rotational torque is exerted on the drill (rotary tool) B3, a component force is exerted on a side closer to the arbor A. Accordingly, the drill B3 provides a functional advantage that the drill B3 is unlikely to fall off from the arbor A when a rotational torque is exerted on the drill B3.
Other than the above, the components of Embodiment 4 are the same as those described in the embodiment shown in Figs. 3A to 3D. In Embodiment 4, components that are the same as or corresponding to components of the embodiment shown in Figs. 3A to 3D are denoted by reference signs that result from adding 300 to the reference signs of the same or corresponding components in the embodiment shown in Figs. 3A to 3D, and therefore, a description of such components is omitted.

As yet another embodiment (Embodiment 5) according to the present invention, a drill B4 is described below. As shown in Figs. 9A to 9D, a shank 411 may be formed as a substantially even-numbered polygonal cylindrical body which is substantially six or more sided (in Embodiment 5, a hexagonal cylindrical body). An engagement recess 415 may be formed in at least one of the faces of the substantially polygonal cylindrical body. A groove 416 may be formed in at least one of the remaining faces. An engagement face 422 for screw locking may be formed at another one of the remaining faces. For example, in the case of Embodiment 5, the engagement recess 415 is formed in each of three faces Fa such that the engagement recess 415 is formed in every other sides of the hexagonal cylindrical body, and also, the engagement face 422 for screw locking is formed in a face Fb which is one of the remaining three sides. The groove 416 is formed in two faces Fc which are the other two of the remaining three sides.
The drill B4 having the above structure is a rotary tool of which the shank 411 can be formed through an easy process. Moreover, the structure of the drill B4 makes it possible to exert a significantly large rotational torque on the drill B4 from the arbor A.
It will be understood that in the case of the drill B4 having the above structure, the insertion hole of the arbor which is not shown needs to be formed as a substantially even-numbered polygonal cylindrical hole which is substantially six or more sided, such that the shape of the insertion hole matches the external shape of the shank 411.
Other than the above, the components of Embodiment 5 are the same as those described in the embodiment shown in Figs. 3A to 3D. In Embodiment 5, components that are the same as or corresponding to components of the embodiment shown in Figs. 3A to 3D are denoted by reference signs that result from adding 400 to the reference signs of the same or corresponding components in the embodiment shown in Figs. 3A to3D, and therefore, a description such components is omitted.

As yet another embodiment (Embodiment 6) according to the present invention, a drill B5 is described below. As shown in Figs. 11 A to 11D, passage recesses 518 may be formed by forming a proximal end portion of a shank 511 such that the shank 511 has, at the proximal end portion, a round cross section with a reduced (smaller) diameter.
The drill B5 having the above structure is a rotary tool of which the shank 511 can be formed through an easily process. Other than the above, the components of Embodiment 6 are the same as those described in the embodiment shown in Figs. 3A to3D. In Embodiment 6, components that are the same as or corresponding to components of the embodiment shown in Figs. 3A to 3D are denoted by reference signs that result from adding 500 to the reference signs of the same or corresponding components in the embodiment shown in Figs. 3A to 3D, and therefore, a description of such components is omitted.

As yet another embodiment (Embodiment 7) according to the present invention, a drill B6 is described below. As shown in Figs. 12A to 12D, a groove 616 may be formed as a recess in the proximal end face of a shank 611. In such a case, although not shown in the drawings, it will be understood that the protrusion in the insertion hole of the arbor needs to be formed to extend in the radial direction of the insertion hole, such that the shape of the protrusion matches the shape of the groove 616.
The drill B6 having the above structure is a drill (rotary tool) of which the groove 616 can be formed through an easy process. Other than the above, the components of Embodiment 7 are the same as those described in the embodiment shown in Figs. 3A to 3D. In Embodiment 7, components that are the same as or corresponding to components of the embodiment shown in Figs. 3A to 3D are denoted by reference signs that result from adding 600 to the reference signs of the same or corresponding components in the embodiment shown in Figs. 3A to 3D, and therefore, a description of such components is omitted.

Described below are functional advantages of the attachement-detachement apparatus that includes: any one of the rotary tools (drill B to drill B6) according to the above-described embodiments; and the arbor A to which the rotary tool is attached by insertion. The description is given below by taking, as an example, the arbor A and the drill B shown in Fig. 1 to Fig. 3D. As shown in Fig. 4, the drill B is inserted into the insertion hole 1 of the arbor A such that the positions of the passage recesses 18 coincide with the positions of the locking members 2 in the circumferential direction while the operation sleeve 4 is pulled up (i.e., moved to the right in Fig. 1). As a result, the drill B and the arbor A are fixed in the axial direction as shown in Fig. 4 and Fig. 5 by the axial direction fixing mechanism, and a rotational torque necessary for a cutting operation is transmitted by the rotational torque transmission mechanism.
Therefore, even if a great rotational torque is exerted temporarily during a drilling process, plastic deformation is not caused at a torque transmission part where a rotational torque is transmitted from the arbor to the drill attached to the arbor. In particular, as described in the above embodiments, torque transmission by the rotational torque transmission mechanism is performed through surface contact between the rectangular protrusion 3 and the groove 16 having a rectangular cross section. Therefore, even if a great rotational torque causing a significant impact is exerted temporarily during a drilling process, plastic deformation is not caused.

A stress exerted on the locking members 2 and the corresponding engagement recesses 15 is merely a stress necessary for the fixing in the axial direction. Thus, the stress to be exerted on these components is greatly reduced as compared to conventional attachement-detachement apparatuses. For this reason, these components can be made compact, that is, the size of the components can be reduced as compared to conventional attachement-detachement apparatuses. Specifically, the diameter of the spherical locking members 2 can be reduced, which makes it possible to reduce the outer diameter of the arbor A. Also, the outer diameter of the shank 11 can be reduced.

The functional advantages have been described by taking, as an example, the arbor A and the drill B shown in Fig. 1 to Fig. 3D. The fundamentally same functional advantages are also provided by attachement-detachement apparatuses that include the arbors and the drills according to the other embodiments shown in Fig. 5 to Fig. 16 and Fig. 17A to Fig. 18C. A description with reference to Fig. 17A to Fig. 18C will be given below.

In the above-described embodiments, the arbor includes the protrusion 3 of the rotational torque transmission mechanism, and the drill (rotary tool) has the groove 16 formed therein. However, it will be understood that, as an alternative structure, the drill (rotary tool) may include the protrusion and the arbor may have the groove formed therein although such an alternative structure is not shown in the drawings.

It should be noted that in the case of removing the drill B from the arbor A when the drill B is held vertically, the drill B is removed from the arbor A by its own weight when the operation sleeve 4 is pulled up.

It will be understood that the present invention is applicable to an attachement-detachement apparatus as shown in Figs. 17A to 17C. When the attachement-detachement apparatus is in a state where a shank 711 of a drill B7 is not yet inserted and attached into the insertion hole 1 of an arbor A7 as shown in Fig. 17B, locking members 702 are in a state of protruding inwardly from the inner peripheral face of the insertion hole 1. Then, at the time of attaching the shank 711 by insertion, an operation sleeve 704 is moved toward the proximal end of the arbor 7 to render the locking members 702 withdrawable in the outward radial direction, and in such a state, the shank 711 is attached by insertion.
In the case of the attachement-detachement apparatus having the above structure, when the operation sleeve 704 of the arbor A7 is operated in order to insert and attach the shank 711 into the insertion hole 701 and the operation of the operation sleeve 704 is stopped after the shank 711 is attached into the insertion hole 701, the operation sleeve 704 moves toward the distal end of the arbor 7 owing to the pressing force of the spring 5 which presses the operation sleeve 704 toward the distal end, and an inner tapered face of the operation sleeve 704 presses the locking members 702 in the inward radial direction, so that the locking members 702 come into engagement with engagement recesses 715 of the shank 711 and thereby the drill B7 is fixed to the arbor A7 in the axial direction.
The groove 16, formed in the proximal end face of the shank 711 in a manner to extend in the radial direction, comes into engagement with the protrusion 3 which is formed to extend in the radial direction within the insertion hole 701 of the arbor A7, so that the drill B7 is fixed to the arbor A7 in the rotational direction.
In Figs. 17A to 17C, components that are the same as or corresponding to components shown in Fig. 1 to Fig. 16 are denoted by reference signs that result from adding 700 to the reference signs of the same or corresponding components in Fig. 1 to Fig. 16, and therefore, a description of such components is omitted to avoid repetition. It should be noted that, in Figs. 17A to 17C, a reference sign "720" denotes a center drill for use in positioning at a time of drilling, and a reference sign "721" denotes a supply hole for a cutting fluid.

Although the embodiments have been described above by taking a so-called two-touch type attachement-detachement apparatus as an example, the present invention is of course applicable to a so-called one-touch type attachement-detachement apparatus. Specifically, the above embodiments describe the attachement-detachement apparatus including an arbor and a shank, in which the locking members 2 are in a state of protruding inwardly from the inner peripheral face of the insertion hole 1 as shown in Fig. 2 even before the shank 11 is inserted and attached into the insertion hole 1 of the arbor A. However, the present invention is of course applicable to an attachement-detachement apparatus as shown in Figs. 18A to 18C, in which locking members 802 are in a state of not protruding inwardly from the inner peripheral face of an insertion hole 801 as shown in Fig. 18B before a shank 811 is inserted and attached into the insertion hole 801 of an arbor A8.
In the case of the attachement-detachement apparatus having the above structure, when the shank 811 of a drill B8 is simply inserted and attached into the insertion hole 801 without operating an operation sleeve 804 of the arbor A8, the locking members 802 protrude in the inward radial direction, so that the locking members 802 come into engagement with engagement recesses 815 of the drill B8 and thereby the drill B8 is fixed in the axial direction.
In Figs. 18A to 18C, components that are the same as or corresponding to components shown in Fig. 1 to Fig. 16 are denoted by reference signs that result from adding 800 to the reference signs of the same or corresponding components in Fig. 1 to Fig. 16, and therefore, a description such components is omitted to avoid repetition. It should be noted that the drill B8 shown in Figs. 18A to 18C is a diamond core drill having cutting edges 814 at a distal end portion of a body 812. The cutting edges 814 are formed from diamond grains.

It will be understood that the present invention is not limited to the above-described embodiments, and the present invention can be implemented in various forms without departing from the scope of the technical idea of the present invention.

### Industrial Applicability

An attachement-detachement apparatus for a rotary tool and the rotary tool according to the present invention can be used, for example, as a rotary tool for various machine tools and an attachement-detachement apparatus for the rotary tool.

### Reference Signs List

- A, A7, A8: arbor
- B to B8: drill (rotary tool)
- 1: insertion hole
- 2: locking member (one of the components forming an axial direction fixing mechanism)
- 3: protrusion (one of the components forming a rotational torque transmission mechanism)
- 11: shank
- 15: engagement recess (one of the components forming the axial direction fixing mechanism)
- 16: groove (one of the components forming the rotational torque transmission mechanism)
- 18: passage recess
- 22: engagement face

## Claims

1. An attachement-detachement apparatus including a rotary tool and an arbor, in which a shank formed at a proximal end portion of the rotary tool is configured to be inserted and attached into an insertion hole of the arbor in such a manner as to allow a rotational torque to be transmitted from the arbor to the rotary tool and to allow the rotary tool to be fixed to the arbor in an axial direction during a drilling process, the insertion hole having an opening opened at a distal end of the arbor and the arbor being attached to a drive shaft, wherein
a rotational torque transmission mechanism configured to transmit the rotational torque from the arbor to the rotary tool, and an axial direction fixing mechanism configured to fix the rotary tool to the arbor in the axial direction, are separately formed between the shank of the rotary tool and the insertion hole of the arbor.

2. The attachement-detachement apparatus according to claim 1, wherein
the rotational torque transmission mechanism includes: a protrusion formed at one of the arbor and the rotary tool in a manner to extend in the axial direction; and a groove to be engaged with the protrusion, the groove being formed at the other of the arbor and the rotary tool in a manner to extend in the axial direction, and
the axial direction fixing mechanism includes: an engagement recess formed in the shank of the rotary tool; and a locking member configured to come into engagement with the engagement recess, the locking member being positioned such that the locking member is protrudable in an inward radial direction within the insertion hole of the arbor.

3. The attachement-detachement apparatus according to claim 2, wherein the rotational torque transmission mechanism includes: a groove formed in the shank in a manner to extend in the axial direction; and a protrusion formed in the insertion hole of the arbor in a manner to extend in the axial direction, the protrusion coming into engagement with the groove by surface contact.

4. The attachement-detachement apparatus according to claim 3, wherein
a position at which the groove is formed and a position at which the engagement recess is formed coincide with each other in a circumferential direction of the shank, and
a position at which the locking member is provided and a position at which the protrusion is provided coincide with each other in a circumferential direction of the insertion hole of the arbor, such that the protrusion is formed at an opening edge side of the insertion hole in the axial direction and the locking member is positioned at a proximal end side of the insertion hole in the axial direction.

5. The attachement-detachement apparatus according to claim 4, wherein the groove is formed to have a size that allows the locking member to pass through in the axial direction.

6. The attachement-detachement apparatus according to any one of claims 1 to 5, wherein a play in a rotational direction in the axial direction fixing mechanism is greater than a play in the rotational direction in the rotational torque transmission mechanism.

7. The rotary tool of the attachement-detachement apparatus according to claim 3, wherein
the groove, which comes into engagement by surface contact with the protrusion formed in the insertion hole of the arbor, is formed in a portion, of the shank, that does not coincide in a circumferential direction of the shank with a portion, of the shank, in which the engagement recess is formed.

8. The rotary tool for the attachement-detachement apparatus according to claim 3, wherein
the groove, which comes into engagement by surface contact with the protrusion formed in the insertion hole, is formed in a portion, of the shank, that coincides in a circumferential direction of the shank with a portion, of the shank, in which the engagement recess is formed.

9. The rotary tool of the attachement-detachement apparatus according to claim 3, wherein
an engagement face for screw locking is formed at an outer peripheral portion of the shank, in which portion neither the groove nor the engagement recess is formed, such that a position at which the engagement face for screw locking is formed is spaced apart from a proximal end of the shank toward a distal end of the shank.

10. The rotary tool according to any one of claims 7 to 9, wherein the groove is formed in a tapered shape such that, when seen in side view, the groove has a width in the circumferential direction and the width is widened toward a proximal end of the groove.

11. The rotary tool according to any one of claims 7 to 9, wherein
a distal end of the groove is diagonally formed such that, in side view, the distal end of the groove is positioned forward from a proximal end of the groove with respect to a rotational direction for cutting.
